Europäisches Patentamt

European Patent Office

Office européen des brevets

(19)

(11) **EP 1 428 894 A1**

(12) **EUROPÄISCHE PATENTANMELDUNG**

(43) Veröffentlichungstag:
**16.06.2004 Patentblatt 2004/25**

(51) Int Cl.⁷: **C21C 7/10**

(21) Anmeldenummer: **03026707.4**

(22) Anmeldetag: **21.11.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **13.12.2002 DE 10258688**
**10.10.2003 DE 10347200**

(71) Anmelder: **SMS Mevac GmbH**
**45141 Essen (DE)**

(72) Erfinder:
• **Dittrich, Rainer**
**47055 Duisburg (DE)**
• **Teworte, Rainer Dr.**
**58239 Schwerte (DE)**
• **Tembergen, Dieter**
**47198 Duisburg (DE)**

(74) Vertreter: **Valentin, Ekkehard, Dipl.-Ing.**
**Patentanwälte Hemmerich, Valentin, Gihske, Grosse,**
**Hammerstrasse 2**
**57072 Siegen (DE)**

(54) **Entgasungsverfahren von Flüssigstahl**

(57) Um bei einem Entgasungsverfahren von Flüssigstahl unter Vakuum, bei dem die Entgasung durch Zugabe von Feststoffen beschleunigt wird, weiterhin zu verbessern, sollen die Feststoffe in stückiger Form mit einer Korngröße von 2-50 mm in der Anfangsphase der Entgasung, insbesondere in den ersten 5 Minuten, der Schmelze zugegeben werden.

Fig. 1: Kohlenstoffgehalt eines vakuumbehandelten ULC-Stahls mit und ohne Eisenerzzugabe nach 10 min Entkohlungszeit

EP 1 428 894 A1

**Beschreibung**

Die Erfindung betrifft ein Entgasungsverfahren von Flüssigstahl unter Vakuum, wobei durch Zugabe von Feststoffen der Entgasungsvorgang beschleunigt wird.

Im Folgenden werden die wesentlichen thermodynamischen und kinetischen Prinzipien der Entgasungsvorgänge dargestellt, die den unterschiedlichen Entgasungsmechanismen zugrunde liegen.

Thermodynamisch basieren die Entgasungsvorgänge auf der Druckabhängigkeit der metallurgischen Reaktionen von atomar im flüssigen Stahl gelösten chemischen Elementen.

Prinzipiell gilt für die Elemente Wasserstoff und Stickstoff.

$$(1) \qquad 2\,[H] \rightarrow \{H_2\} \text{ und } 2\,[N] \rightarrow \{N_2\}$$

$$(2) \qquad [H] = k_H * (P_{\{H\}})^{1/2} \text{ und } [N] = k_N * (P_{\{N\}})^{1/2}$$

Die Konzentration des atomar gelösten Elements ist bei zweiatomigen Molekülen der Quadratwurzel seines Partialdrucks in der umgebenden Gasphase proportional (Sievert'sches-Gesetz).

Im Falle des Elementes Sauerstoff findet die Entfernung weitestgehend über die Reaktion mit dem im Stahl gelösten Kohlenstoff gemäß

$$(3) \qquad [C] + [O] \rightarrow \{CO\}$$

unter Bildung des gasförmigen Reaktionsproduktes Kohlenmonoxid statt. Dieser Vorgang bedingt eine simultane, kombinierte Absenkung der Gehalte beider Elemente.

$$(4) \qquad [C] * [O] = k_{CO} * P_{\{CO\}}$$

Hierbei ist das Produkt aus Sauer- und Kohlenstoffkonzentration dem Kohlenmonoxidpartialdruck in der umgebenden Gasphase direkt proportional.

Durch Verminderung des Partialdruckes in der Gasphase mittels kontinuierlicher Absaugung des Prozessgases kann in Vakuumanlagen demzufolge eine Absenkung der (des) Elementgehalte (s) im Flüssigstahl hervorgerufen werden. Dies geschieht bei hinreichender Behandlungsdauer bis zu dem vom Druck abhängigen Gleichgewichtsgehalt des chemischen Elements.

Dieser Vorgang vollzieht sich an allen Grenzflächen Stahl-/Gasphase. Entsprechend ist nicht nur die Stahlbadoberfläche am Reaktionsgeschehen beteiligt, sondern auch alle Blasen von Gasen innerhalb der Schmelze, die einen Ort niedrigen Partialdrucks des jeweiligen Elements darstellen. Dies gilt insbesondere für die bei allen Vakuumverfahren in den Flüssigstahl eingeleiteten Inertgase. An dieser Stelle wird die zweifache Wirkung der bei allen Vakuumverfahren eingeleiteten Inertgase deutlich. Einerseits bewirken diese Gase eine Durchmischung der Schmelze zur Homogenisierung durch konvektiven Transport, andererseits stellen die Gasblasen Orte niedrigen Partialdrucks für die im Stahl gelösten Gase dar und tragen so unmittelbar zu deren Entfernung bei.

Im Zusammenhang mit der Kinetik der Entgasung ist die grundsätzliche Voraussetzung für den Entgasungsvorgang der Übergang des Elements vom gelösten Zustand in den gasförmigen. Der Übergang eines in flüssigem Metall gelösten Gases in die Gasphase besteht aus einer Anzahl von Teilschritten, die in ihrer Gesamtheit die Geschwindigkeit des Entgasungsvorgangs bestimmen:

- Konvektiver Transport aus dem Inneren der Schmelze in den oberflächennahen Bereich des Metalls. Von dort aus erfolgt der Weitertransport zur Grenzschicht durch Diffusion.
- Übergang der Gasatome vom gelösten in den adsorbierten Zustand an der Metalloberfläche.
- Reaktion der Gasatome in der adsorbierten Schicht entweder miteinander unter Bildung von zweiatomigen Molekülen oder mit anderen Atomen, wie z.B. im Falle der Bildung von Kohlenmonoxid.
- Desorption der Gasmoleküle von der Oberfläche.
- Diffusion der Gasmoleküle in den umgebenden Gasraum.

Neben dem Übergang von Gasmolekülen in den Gasraum an bereits existierenden Grenzschichten (Badoberfläche, Inertgasblasen) spielt die Entgasung durch spontane Bildung von Gasblasen eine wichtige Rolle.

Dieser Entgasungsvorgang setzt die Existenz wachstumsfähiger Blasenkeime voraus. Dazu muss der Gleichgewichtsdruck im Inneren des Blasenkeims mindestens so hoch sein wie die Summe aus Umgebungsdruck über der Schmelze, ferrostatischem Druck der Flüssigkeitssäule oberhalb der Gasblase sowie der durch die Oberflächenspannung bedingte Kapillardruck.

Dabei kann sich die Bildung von Gasblasen innerhalb der Schmelze prinzipiell auf unterschiedliche Weise nach der homogenen und der inhomogenen Keimbildung vollziehen:

Die homogene Bildung eines stabilen Wasserstoff-Blasenkeims vollzieht sich erst oberhalb eines Gleichgewichtsdrucks von $10^4$ atm. Entsprechende Gasgehalte treten in Stahlwerksprozessen nicht auf. Die homogene Keimbildung im Falle der Elemente Wasser- und Stickstoff ist daher unwahrscheinlich und spielt in den technischen Prozessen keine Rolle.

Die heterogene Bildung von wachstumsfähigen Blasenkeimen an festen Grenzflächen vollzieht sich leichter. Dies gilt insbesondere an porösen, rauen, zerklüfteten Oberflächen, da hier der Kontaktwinkel des Blasenkeims klein ist (< 180°) und damit auch der Binnendruck einer wachstumsfähigen Blase geringer sein kann als der Gleichgewichtsdruck in der umgebenden Schmelze.

Es ist bekannt, dass sich aus diesem Grunde die Bildung von Gasblasen innerhalb einer Stahlschmelze an den Oberflächen der Feuerfest-Zustellung sowie an festen Schlackenpartikeln vollzieht.

Die bei der Entgasung über heterogene Keimbildung entstehenden Gasblasen bewirken eine zusätzliche Rührwirkung in der Schmelze. Dadurch werden konvektive Transportvorgänge beschleunigt. Dies wiederum fördert die Entgasung, so dass ein autokatalytischer, sich aus sich selbst heraus beschleunigender, Prozess entsteht.

Die oben genannten Eigenschaften und Zusammenhänge werden bei der Entfernung von in flüssigem Stahl gelösten chemischen Elementen wie Wasserstoff, Stickstoff und Sauerstoff seit Jahrzehnten großtechnisch genutzt.

Im Zusammenhang mit dem technischen Feld der vorliegenden Erfindung gibt es im Schrifttum Hinweise. Okada et al. beschreiben für den RH-Prozess die Beschleunigung der Entkohlungsreaktion unterhalb eines Badkohlenstoffgehaltes von 20 ppm durch Aufblasen von pulverförmigem Eisenoxid ($Fe_2O_3$) mittels einer Toplanze. Dabei dienen die aufgeblasenen Eisenoxidpartikel einerseits als Keime zur Bildung von CO-Blasen und andererseits als Sauerstoffträger für den Entkohlungsprozess. Gefäßdruck (1-2 Torr, 1,3-2,6 mbar) und Lanzenabstand zur Badoberfläche (3 m) müssen so gewählt werden, dass ein hinreichend tiefes Eindringen des pulverförmigen Materials gewährleistet ist. Die Partikelgröße des $Fe_2O_3$-Pulvers liegt bei einer Maschenweite von 100, was 0,149 mm entspricht. Die Zugaberate des $Fe_2O_3$-Pulvers zur Entkohlung liegt bei 20-60kg/min.

Kikuchi et al. (Tagungsbericht von Proceedings of The Sixth Internationale Iron and Steel Congress, 1990, Nagoya, ISIJ, "Development of the deoxidation technique for clean steel production by the pressure elevating and reducing method", S. 527ff.) beschreiben mit dem NK-PERM-Verfahren (pressure elevating and reducing method) eine Variante der Pfannenstandentgasung, die die Heterogenkeimbildung von Stickstoff an festen, nichtmetallischen Einschlüssen zur Ausspülung derselben nutzt und auf diese Weise zur Verbesserung des oxidischen Reinheitsgrads beiträgt. Dazu wird die Schmelze zunächst über Bodenspülung mit Stickstoff beaufschlagt. In einer anschließenden Vakuumbehandlung scheidet sich dann der gelöste Stickstoff an den Einschlüssen ab und spült diese aus.

In der US 6,235,084 B1 wird ein aluminothermer Heizprozess während der RH-Behandlung beschrieben. Hierbei wird zur Entkohlung unter Vakuum in einem ersten Schritt Sauerstoff eingeblasen und anschließend eine metallische verbrennbare Substanz, wie beispielsweise Aluminiumpulver eingeführt. Dessen in der Schmelze dispergiertes, festes Reaktionsprodukt $Al_2O_3$ kann in der nachfolgenden Entkohlungsstufe als Keimbildner von CO-Blasen dienen. Dadurch kann die Entkohlungsgeschwindigkeit erhöht und die Entkohlungsdauer vermindert werden.

Nochmals zusammengefasst sind Entgasungsreaktionen druckabhängige Reaktionen. Dazu gehören die Entfernung von im Stahl gelösten Gasen wie Wasserstoff und Stickstoff und ebenso die Reduktion von im flüssigen Stahl gelösten Sauerstoff unter Bildung von Kohlenmonoxyd. Die Reaktionen werden im Wesentlichen bestimmt durch die Druckverhältnisse oberhalb der Stahlbadoberfläche und dem Durchmischungsverhältnis, wie Stahlumlaufrate und anlagentechnische Ausstattung.

Bei den bekannten Verfahren treten folgende Probleme auf. Zum einen ist die Saugleistungskapazität der Vakuumpumpe zur Realisierung niedriger Arbeitsdrükke hoch. Des weiteren sind die Medienverbräuche (Argon, Stickstoff) zur Realisierung der erforderlichen Stahlumlaufraten hoch. Es ergeben sich lange Vakuumbehandlungszeiten. Dies führt zu hohen Feuerfest-Verbräuchen für die metallurgischen Gefäße.

Der Erfindung liegt die Aufgabe zugrunde, ein verbessertes Verfahren zur Beschleunigung der Entgasungsvorgänge zu schaffen. Insbesondere soll einerseits eine Produktivitätsverbesserung der Anlagen (Verkürzung der Vakuumbehandlungszeiten, Verlängerung der Standzeiten der metallurgischen Gefäße) sowie andererseits eine Qualitätsverbesserung des behandelten Stahls erreicht werden, d.h. niedrigere Endgehalte der im flüssigen Stahl gelösten Gase.

Diese Aufgabe wird mit dem Verfahren mit den Merkmalen des Anspruchs 1 gelöst. Vorteilhafte Weiterentwicklungen sind in den Unteransprüchen offenbart.

Erfindungsgemäß werden in der Vakuumanlage während des Entgasungsprozesses stückige Feststoffe, insbesondere feine Granulate, zur gezielten Heterogenkeimbildung kontinuierlich chargiert. Durch die Zugabe (Aufgabe, Einblasen und Aufblasen) der Feststoffe während der Vakuumbehandlung kommt es durch heterogene Keimbildung zur Beschleunigung der Entgasungsreaktionen.

Größe und spezifisches Gewicht - 0,2-50 mm Körnung - des erfindungsgemäß vorgeschlagenen stückigen Materials ermöglichen ein tiefes Eindringen der Feststoffe in die Schmelze ohne besonderen apparativen Aufwand, wie z.B. den Einsatz einer Blaslanze bei geringem Abstand zum Bad und damit starker Neigung zur Verbärung.

Darüber hinaus werden Materialverluste durch Absaugung aus dem Vakuumgefäß weitestgehend vermieden. Gegenüber dem Aufblasen von Pulvern resultiert hieraus ein erhöhter Wirkungsgrad. Damit einhergehend ergibt sich zudem eine geringere Belastung (Verschmutzung) des Vakuumerzeugers.

Die stückigen Feststoffe werden bereits während der Anfangsphase der Entgasung, insbesondere in den ersten 5 Minuten, der Schmelze zugegeben und beschleunigen den Entgasungs-, insbesondere den Entkohlungsprozess, signifikant.

Bedingt durch die physikalischen Eigenschaften des Materials kann der Prozess auf einem höheren Druckniveau betrieben werden, d.h. oberhalb eines Druckes von 2 mbar. Ein Druck oberhalb von 2 mbar begünstigt die Bildung von Kohlenmonoxid. Die Zugaberate liegt bei 20-100 kg/min. Der obere Grenzdruck kann mit 150 mbar angesetzt werden.

Zudem kann im Vergleich zum Einbringen von Pulver auf die Lanze verzichtet werden. Nach einer bevorzugten Verfahrensvariante werden die Feststoffe in Vakuumbunkern gespeichert und dosiert über Dosiervorrichtungen, insbesondere über eine Zuteilrinne oder eine Zellradschleuse, der Schmelze zugeführt.

Aufgrund der Beschleunigung der Entgasungsvorgänge kann die Entgasungsdauer bei unverändertem Endgehalt der Gase im Stahl verkürzt werden. Hierdurch wird die Anlagenproduktivität erhöht. Darüber hinaus verlängert sich die spezifische Standzeit der Feuerfest-Zustellung des Gefäßes, bei RH-Anlagen, sowie der Stahlpfanne. Daraus resultiert eine Senkung der Betriebskosten.

Unter Beibehaltung der Behandlungszeit konventionellen Technologien wird ein niedriger Endgehalt der gelösten Gase erreicht. Damit wird unmittelbar eine Verbesserung der technologischen Eigenschaften des Stahls erzielt. Im Falle des Entkohlungsprozesses kann ein solches Kohlenstoffniveau erreicht werden, dass kohlenstoffhaltige, kostengünstige Zuschläge wie FeMn oder Kühlschrott eingesetzt werden können, ohne die Zielanalyse zu überschreiten. Auf den Einsatz von Elektrolyt-FeMn kann in diesem Fall verzichtet werden.

Nachfolgend werden die Ergebnisse einer Behandlung von ULC-Güten nach dem erfindungsgemäßen Verfahren dargestellt:

An einer 265 t RH-Anlage durchgeführte Versuche zur Beschleunigung des Entkohlungsprozesses haben zur einer signifikanten Verbesserung der Entkohlung bei tiefstentkohlten ULC-Güten geführt. Es wurde stückiges Eisenerz in der Anfangsphase der Entkohlung kontinuierlich über die Vibro-Rinne des Vakuumbunkers bei einem Gefäßdruck von > 2 mbar chargiert. Die Förderrate lag bei 40 kg/min., die Stückgröße des Erzes zwischen 3 und 10 mm. Dabei wurden Schmelzen mit 200 - 250 ppm Ausgangskohlenstoffgehalt nach 10 und 15 min Entkohlungsdauer Proben entnommen.

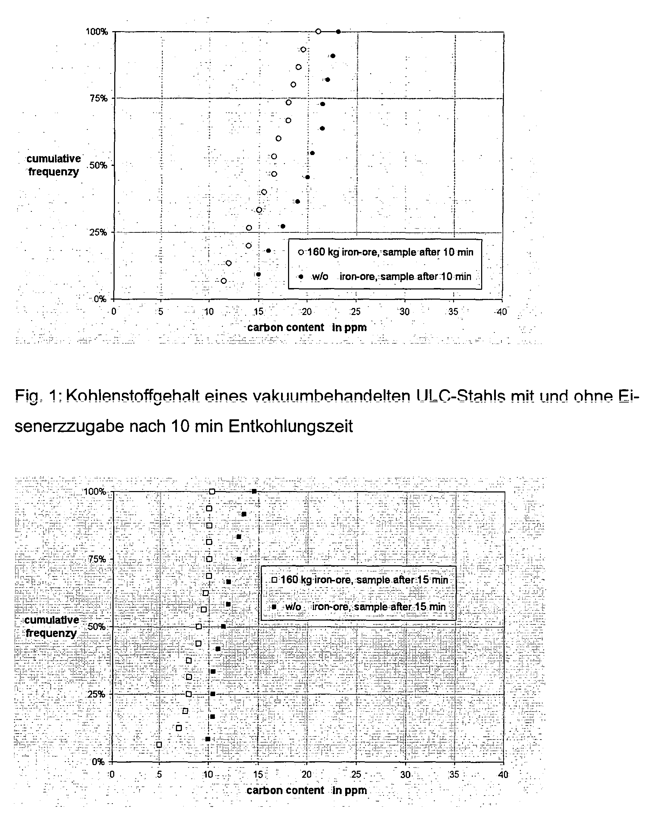

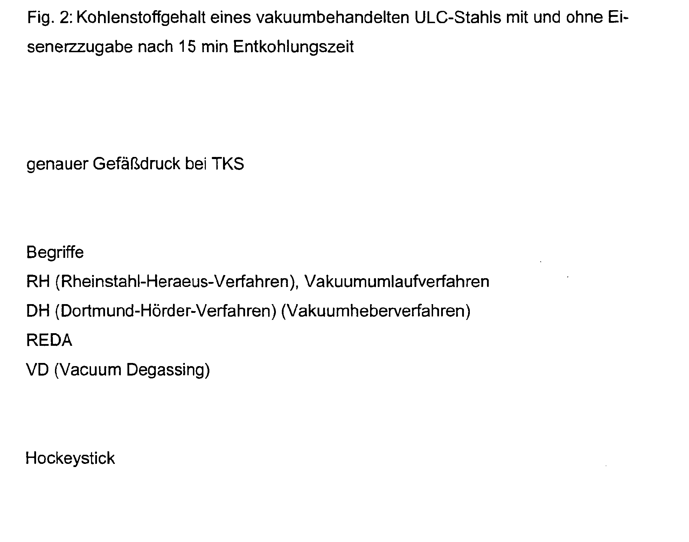

Die Figuren zeigen das Ergebnis der Versuche durch das Verhältnis der kumulativen Frequenz (Summenhäufigkeit) in % zum Kohlenstoff-Gehalt in ppm mit und ohne Eisenerzzugabe nach einer Entkohlungsdauer von 10 Minuten (Fig. 1) und von 15 Minuten (Fig. 2).

Nach gleicher Entkohlungsdauer zeigen die Schmelzen mit Eisenerzzugabe im Mittel deutlich niedrigere Kohlenstoffgehalte. Hierbei zeigen die Kohlenstoffgehalte, die nach 10 min Entkohlungsdauer gemessen wurden, an, dass die Entkohlungsgeschwindigkeit insbesondere in der Frühphase des Entkohlungsprozesses erhöht wurde, in der auch die Eisenerzzugabe erfolgte.

Zusammenfassend schlägt die Erfindung ein Verfahren zur Beschleunigung bzw. Unterstützung von Entgasungsvorgängen oder chemischen Reaktionen mit gasförmigen Reaktionsprodukten bei der sekundärmetallurgischen Behandlung von flüssigem Rohstahl unter Vakuum durch geeignete Zugabe von Feststoffen in stückiger oder Granulatform vor. Durch Anwendung des der Erfindung zugrunde liegenden Prinzips können die Produktivität der Anlage gesteigert, die Stahlqualität verbessert und die Produktionskosten vermindert werden.

Als Vakuumanlagen kommen Anlagen für die Pfannenstandentgasung, Pfannenentgasung oder für die Teilmengenentgasung in Frage, zum Beispiel RH (Vakuumumlaufverfahren, Abkürzung für <u>Rh</u>einstahl-<u>H</u>eraeus-Verfahren), DH (Vakuumheberverfahren, Abkürzung für <u>D</u>ortmund-<u>H</u>örder-Verfahren), VD (<u>V</u>acuum <u>d</u>egassing) sowie REDA (Abkürzung für <u>Re</u>volutionary <u>D</u>egassing <u>A</u>ccelerator).

Nachfolgend werden weitere Ausführungsbeispiele von Anlagen mit entsprechenden Chargiermöglichkeiten für die Feststoffe aufgeführt:

VD-Anlage mit Einblastauchlanze in das Stahlbad;
REDA- und RH-Anlage mit Hockeystick unterhalb des Ansaugrüssels;
REDA-, RH- und VD-Anlage mit Vakuumbunker oder -schleuse mit Zuteilrinne;
RH-Anlage mit Einblasen über Rüsselgasröhrchen;
REDA-, RH und VD-Anlage mit Aufblasen auf das Stahlbad mittels Lanze.

**Patentansprüche**

1. Entgasungsverfahren von Flüssigstahl unter Vakuum, wobei durch Zugabe von Feststoffen der Entgasungsvorgang beschleunigt wird,
   **dadurch gekennzeichnet,**
   **dass** die Feststoffe in stückiger Form mit einer Korngröße von 2-50 mm in der Anfangsphase der Entgasung, insbesondere in den ersten 5 Minuten, der Schmelze zugegeben werden.

2. Entgasungsverfahren nach Anspruch 1,
   **dadurch gekennzeichnet,**
   **dass** die Feststoffe kontinuierlich mit einer Zugaberate von 20-100 kg/min bei einem Gefäßdruck von > 2 mbar zugeführt werden.

3. Entgasungsverfahren nach Anspruch 1 oder 2,
   **dadurch gekennzeichnet,**

**dass** die Feststoffe porös sind.

4. Entgasungsverfahren nach einem der Ansprüche 1 bis 3, **dadurch gekennzeichnet,** **dass** die Feststoffe als Granulat zugegeben werden.

5. Entgasungsverfahren nach einem der Ansprüche 1 bis 4, **dadurch gekennzeichnet,** **dass** die Feststoffe Metalle, Erze, insbesondere Eisenerz, und/oder Schlacken sind.

6. Entgasungsverfahren nach einem der Ansprüche 1 bis 5, **dadurch gekennzeichnet,** **dass** die Feststoffe in Vakuumbunkern gespeichert werden und dosiert über Dosiervorrichtungen, insbesondere über eine Zuteilrinne oder eine Zellradschleuse, der Schmelze zugeführt werden.

7. Entgasungsverfahren nach einem der Ansprüche 1 bis 5, **dadurch gekennzeichnet,** **dass** bei einem Umlaufentgasen die Feststoffe mittels Unterbaddüsen in die Schmelze eingeblasen werden.

8. Entgasungsverfahren nach einem der Ansprüche 1 bis 6 oder 7, **dadurch gekennzeichnet,** **dass** bei einem Umlaufentgasen oder bei einem Pfannenstandentgasen die Feststoffe mittels Tauchlanzen in die Schmelze eingeblasen werden.

Fig. 1: Kohlenstoffgehalt eines vakuumbehandelten ULC-Stahls mit und ohne Eisenerzzugabe nach 10 min Entkohlungszeit

Fig. 2: Kohlenstoffgehalt eines vakuumbehandelten ULC-Stahls mit und ohne Eisenerzzugabe nach 15 min Entkohlungszeit

genauer Gefäßdruck bei TKS

Begriffe

RH (Rheinstahl-Heraeus-Verfahren), Vakuumumlaufverfahren

DH (Dortmund-Hörder-Verfahren) (Vakuumheberverfahren)

REDA

VD (Vacuum Degassing)

Hockeystick

EP 1 428 894 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | PATENT ABSTRACTS OF JAPAN Bd. 013, Nr. 379 (C-628), 22. August 1989 (1989-08-22) & JP 01 129925 A (OSAKA TOKUSHU GOKIN KK), 23. Mai 1989 (1989-05-23) * Zusammenfassung * | 1-6 | C21C7/10 |
| X | PATENT ABSTRACTS OF JAPAN Bd. 004, Nr. 166 (C-031), 18. November 1980 (1980-11-18) & JP 55 107718 A (NIPPON STEEL CORP), 19. August 1980 (1980-08-19) * Zusammenfassung * | 1-6 | |
| X | US 5 228 902 A (BOGAN ROBERT S ET AL) 20. Juli 1993 (1993-07-20) * Spalte 2, Zeile 34 - Spalte 3, Zeile 11; Ansprüche 1-3,8-10 * | 1-6 | |
| A | STEFFEN R: "ERGEBNISSE DES 8. DEUTSCH-JAPANISCHEN SEMINARS UEBER DIE GRUNDLAGEN DER EISEN- UND STAHLERZEUGUNG" STAHL UND EISEN, VERLAG STAHLEISEN GMBH. DUSSELDORF, DE, Bd. 114, Nr. 12, Dezember 1994 (1994-12), Seiten 79-84, XP009026115 ISSN: 0340-4803 * Seite 81; Abbildungen 8,9 * | 1-8 | RECHERCHIERTE SACHGEBIETE (Int.Cl.7) C21C |
| A | NADIF M ET AL: "MANUFACTURING OF ULTRA LOW CARBON AND NITROGEN STEELS (C 50 PPM AND N 30 PPM). PART I" REVUE DE METALLURGIE, REVUE DE METALLURGIE. PARIS, FR, Januar 1990 (1990-01), Seiten 64-77, XP009026116 ISSN: 0035-1563 * das ganze Dokument * | 1-8 | |

-/--

Der vorliegende Recherchenbericht wurde für alle Patentansprüche erstellt

| Recherchenort | Abschlußdatum der Recherche | Prüfer |
|---|---|---|
| München | 31. Maerz 2004 | Bergman, L |

KATEGORIE DER GENANNTEN DOKUMENTE

X : von besonderer Bedeutung allein betrachtet
Y : von besonderer Bedeutung in Verbindung mit einer
 anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
 nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes
 Dokument

EPO FORM 1503 03.82 (P04C03)

**Europäisches Patentamt**

# EUROPÄISCHER RECHERCHENBERICHT

Nummer der Anmeldung

EP 03 02 6707

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | KOMAI T ET AL: "FLUXES USED IN SECONDARY REFINING" NIPPON STEEL TECHNICAL REPORT OVERSEAS, NIPPON STEEL CO., TOKYO, JP, Nr. 23, Juni 1984 (1984-06), Seiten 31-42, XP009026127 ISSN: 0300-306X * das ganze Dokument * ----- | 1-8 | |
| A | "RH-INJECTION PROCESS COMBINES DEGASSING AND POWDER INJECTION" STEEL TIMES, FUEL & METALLURGICAL JOURNALS LTD. LONDON, GB, Bd. 216, Nr. 3, 1. März 1988 (1988-03-01), Seite 143, XP000025550 ISSN: 0039-095X * das ganze Dokument * ----- | 1-8 | |
| A | WEI J-H ET AL: "KINETIC MODEL OF DESULPHURISATION BY POWDER INJECTION AND BLOWING IN RH REFINING OF MOLTEN STEEL" IRONMAKING AND STEELMAKING, METALS SOCIETY, LONDON, GB, Bd. 27, Nr. 2, 2000, Seiten 129-137, XP001179190 ISSN: 0301-9233 * das ganze Dokument * ----- | 1-8 | **RECHERCHIERTE SACHGEBIETE (Int.Cl.7)** |
| A | HAASTERT H P: "ENTWICKLUNGSRICHTUNGEN DER SEKUNDAERMETALLURGIE, IM BESONDEREN DAS RH-VERFAHREN ZUR VAKUUMBEHANDLUNG" STAHL UND EISEN, VERLAG STAHLEISEN GMBH. DUSSELDORF, DE, Bd. 111, Nr. 3, 15. März 1991 (1991-03-15), Seiten 103-109, XP000233353 ISSN: 0340-4803 * das ganze Dokument * ----- -/-- | 1-8 | |

Der vorliegende Recherchenbericht wurde für alle Patentansprüche erstellt

| Recherchenort | Abschlußdatum der Recherche | Prüfer |
|---|---|---|
| München | 31. Maerz 2004 | Bergman, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.................................................
& : Mitglied der gleichen Patentfamilie, übereinstimmendes Dokument

EPO FORM 1503 03.82 (P04C03)

**Europäisches**
**Patentamt**

# EUROPÄISCHER RECHERCHENBERICHT

Nummer der Anmeldung

EP 03 02 6707

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 4 695 042 A (KUDOU TAKENORI) 22. September 1987 (1987-09-22) * das ganze Dokument * ----- | 8,9 | |
| A | PATENT ABSTRACTS OF JAPAN & JP 58 037112 A (KAWASKI), * Zusammenfassung * ----- | 8,9 | |
| | | | RECHERCHIERTE SACHGEBIETE (Int.Cl.7) |

Der vorliegende Recherchenbericht wurde für alle Patentansprüche erstellt

| Recherchenort | Abschlußdatum der Recherche | Prüfer |
|---|---|---|
| München | 31. Maerz 2004 | Bergman, L |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 03 02 6707

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-03-2004

| Im Recherchenbericht angeführtes Patentdokument | | Datum der Veröffentlichung | Mitglied(er) der Patentfamilie | | Datum der Veröffentlichung |
|---|---|---|---|---|---|
| JP 01129925 | A | 23-05-1989 | KEINE | | |
| JP 55107718 | A | 19-08-1980 | KEINE | | |
| US 5228902 | A | 20-07-1993 | CA | 2136083 A1 | 17-03-1994 |
| | | | DE | 69327533 D1 | 10-02-2000 |
| | | | DE | 69327533 T2 | 15-06-2000 |
| | | | EP | 0646184 A1 | 05-04-1995 |
| | | | WO | 9405816 A1 | 17-03-1994 |
| US 4695042 | A | 22-09-1987 | JP | 1622254 C | 09-10-1991 |
| | | | JP | 2043805 B | 01-10-1990 |
| | | | JP | 61227122 A | 09-10-1986 |
| | | | AT | 41680 T | 15-04-1989 |
| | | | AU | 565515 B2 | 17-09-1987 |
| | | | AU | 5481886 A | 23-10-1986 |
| | | | BR | 8601431 A | 09-12-1986 |
| | | | CN | 86102142 A ,B | 01-10-1986 |
| | | | DE | 3662534 D1 | 27-04-1989 |
| | | | EP | 0209211 A2 | 21-01-1987 |
| | | | ES | 8707302 A1 | 01-10-1987 |
| | | | KR | 9004650 B1 | 02-07-1990 |
| JP 58037112 | A | 04-03-1983 | JP | 61059375 B | 16-12-1986 |

EPO FORM P0461

Für nähere Einzelheiten zu diesem Anhang : siehe Amtsblatt des Europäischen Patentamts, Nr.12/82